# EUROPEAN PATENT APPLICATION

(11) **EP 4 800 836 A1**
(43) Date of publication of application: **02.09.2026**
(21) Application number: 24893135.4
(22) Date of filing: 23.10.2024
(51) Int. Cl.: H01P 5/18, H01Q 1/48

(54) **FEED NETWORK, ANTENNA DEVICE, AND BASE STATION SYSTEM**

(30) Priority: 21.11.2023 CN 202311563130
(71) Applicant: Huawei Technologies Co., Ltd., Shenzhen, Guangdong 518129 (CN)
(72) Inventor: YIN, Minghua, Shenzhen, Guangdong 518129 (CN); PENG, Zhongwei, Shenzhen, Guangdong 518129 (CN); LIN, Weilve, Shenzhen, Guangdong 518129 (CN); LIU, Fucheng, Shenzhen, Guangdong 518129 (CN); WENG, Jiatian, Shenzhen, Guangdong 518129 (CN); LIU, Fan, Shenzhen, Guangdong 518129 (CN)
(74) Representative: MERH-IP Matias Erny Reichl Hoffmann Patentanwälte PartG mbB
(86) International application number: PCT/CN2024/126664
(87) International publication number: WO 2025/107976

(57) **Abstract**

This application relates to a feed network, an antenna apparatus, and a base station system. The feed network includes a ground plane, a main line, and a coupling line. The main line is in coupling connection to the ground plane, the main line includes an input port and at least one main-line output port, and along a first direction of the main line, the coupling line is in coupling connection to the main line through an open end, the coupling line and the main line are spaced apart, and the coupling line includes the open end and at least one coupling-line output port. The feed network has a simple structure, good manufacturability, and a high design freedom. This can reduce layout space occupied by the feed network, to facilitate a layout of the feed network in the antenna apparatus. In addition, it is easier to adjust phase slopes of a signal at the main-line output port and the coupling-line output port, thereby reducing a phase slope difference of the signal between main-line output ports and coupling-line output ports, and effectively improving an antenna gain.

## Description

This application claims priority to Chinese Patent Application No. 202311563130.1, filed with the China National Intellectual Property Administration on November 21, 2023 and entitled "FEED NETWORK, ANTENNA APPARATUS, AND BASE STATION SYSTEM", which is incorporated herein by reference in its entirety.

### TECHNICAL FIELD

This application relates to the field of communication technologies, and specifically, to a feed network, an antenna apparatus, and a base station system.

### BACKGROUND

In recent years, mobile communication technologies have achieved great development. As an important part of mobile communication, a base station antenna also evolves with the development of the communication technologies, and evolves from a single-frequency base station antenna and a dual-frequency base station antenna to a multi-frequency base station antenna and to a massive multiple input multiple output (Massive Multiple Input Multiple Output, Massive MIMO) base station antenna. Currently, as an antenna array becomes increasingly complex, layout space of a feed network becomes increasingly narrow. Consequently, coupling between feed networks is strong, and radiation performance is greatly affected. In addition, efficiency is low, and energy consumption of an entire communication system is increased.

### SUMMARY

In view of this, this application provides a feed network, an antenna apparatus, and a base station system, to reduce layout space occupied by the feed network, thereby facilitating a layout of the feed network in the antenna apparatus.

A first aspect of embodiments of this application provides a feed network, including a ground plane, a main line, and a coupling line. The main line is in coupling connection to the ground plane, the main line includes an input port and at least one main-line output port, and along a first direction of the main line, the coupling line is in coupling connection to the main line, the coupling line and the main line are spaced apart, and the coupling line includes an open end and at least one coupling-line output port.

In this application, the main line and the coupling line share a common reference ground, so that resonance can be avoided during signal transmission, thereby improving an antenna gain of an antenna, and reducing an insertion loss and a radiation loss. The feed network has a simple structure and good manufacturability. The main line and the coupling line are located in different planes perpendicular to the first direction, so that space occupied by the main line and the coupling line in a plane perpendicular to the first direction can be reduced, thereby reducing layout space occupied by the feed network, and facilitating the layout of the feed network in the antenna apparatus. In addition, the coupling line and the main line are spaced apart along the first direction of the main line. This facilitates adjustment of a spacing distance between the main line and the coupling line, thereby reducing routing density, reducing mutual coupling between another feed network or antenna element and the main line or the coupling line, and improving an antenna gain.

In addition, because there is no direct current connection between the main line and the coupling line, phase slopes of a signal at the main-line output port and the coupling-line output port may be adjusted through inter-line coupling based on lengths, widths, and shapes of the main line and the coupling line, the spacing distance between the main line and the coupling line, or the like, to improve an antenna gain, thereby further reducing structural complexity of the feed network and improving design freedom of the feed network. In addition, the phase slopes of the signal at the main-line output port and the coupling-line output port are adjusted through inter-line coupling between the main line and the coupling line, so that it is easier to reduce a phase slope difference of the signal between main-line output ports and coupling-line output ports, and reduce a quantity of phase jump cycles of the signal between the main-line output ports and the coupling-line output ports, thereby effectively improving an antenna gain.

In a possible design, for example, the feed network includes a plurality of coupling lines, and the plurality of coupling lines are located on a same side of the main line along the first direction of the main line. For example, the feed network includes a plurality of coupling lines, and the plurality of coupling lines are respectively located on two sides of the main line along the first direction of the main line.

A plurality of coupling lines are disposed on one side or two sides of the feed network, to further improve design freedom of the feed network, meet a layout requirement of the feed network in different antenna apparatuses, and meet a requirement for adjusting the phase slopes of the main-line output ports and the coupling-line output ports, thereby improving an antenna gain.

In a possible design, at least two of the plurality of coupling lines are spaced apart along the first direction of the main line.

The phase slopes of the main-line output ports and the coupling-line output ports can be adjusted by adjusting positions of the plurality of coupling lines relative to the main line, thereby reducing the phase slope difference between the main-line output ports and the coupling-line output ports, reducing a quantity of phase jump cycles, improving an antenna gain, further improving the design freedom of the feed network, and meeting the layout requirement of the feed network in different antenna apparatuses.

In a possible design, at least two of the plurality of coupling lines are located in a same plane perpendicular to the first direction of the main line, a plurality of coupling lines located in a same plane are spaced apart along a second direction and/or a third direction of the main line, and the first direction, the second direction, and the third direction of the main line are perpendicular to each other. The plurality of coupling lines located in the same plane are spaced apart, so that inter-line mutual coupling can be reduced, and an antenna gain can be improved.

In a possible design, a projection of the main line at least partially overlaps a projection of the coupling line along the first direction of the main line, thereby further reducing space occupied by the feed network.

In a possible design, one input port is provided, so that a function of converting, by the feed network, one input signal into a plurality of signals for output can be implemented, thereby improving signal transmission efficiency. In addition, the feed network has a simpler structure, thereby facilitating the layout of the feed network in the antenna apparatus.

In a possible design, the feed network includes a plurality of main lines, and the plurality of main lines are connected in parallel to share the one input port, to form a simple 1-toN (N≥2) feed network.

In a possible design, the main line is one or a combination of two or more of a straight line, a curve, or a broken line.

The phase slopes of the main-line output ports and the coupling-line output ports can be adjusted by adjusting the shape of the main line, thereby reducing the phase slope difference between the main-line output ports and the coupling-line output ports, reducing the quantity of phase jump cycles, improving the antenna gain, further improving the design freedom of the feed network, and meeting the layout requirement of the feed network in different antenna apparatuses.

In a possible design, the coupling line is one or a combination of two or more of a straight line, a curve, or a broken line.

The phase slopes of the main-line output ports and the coupling-line output ports can be adjusted by adjusting the shape of the coupling line, thereby reducing the phase slope difference between the main-line output ports and the coupling-line output ports, reducing the quantity of phase jump cycles, improving the antenna gain, further improving the design freedom of the feed network, and meeting the layout requirement of the feed network in different antenna apparatuses.

In a possible design, for example, the ground plane is located on one side of the main line along the first direction of the main line. For example, the ground plane is located on at least one side of the main line along the second direction of the main line. The structure can improve the design freedom of the feed network, and further facilitate the layout of the feed network in the antenna apparatus.

In a possible design, the feed network further includes a support dielectric, and along the first direction of the main line, the support dielectric includes a first surface and a second surface opposite to each other, where one of the first surface and the second surface is provided with the main line, and the other is provided with the coupling line.

The support dielectric can fasten the main line and the coupling line, and maintain stability of relative positions of the main line and the coupling line, thereby facilitating a miniaturization design of the feed network and further reducing the space occupied by the feed network. In addition, the support dielectric can be disposed to better restrict an electromagnetic wave, facilitate stable propagation of a signal, and facilitate improvement of the antenna gain.

A second aspect of embodiments of this application provides an antenna apparatus. The antenna apparatus includes the feed network described in the foregoing content. Because the feed network has the foregoing technical effect, the antenna apparatus including the feed network should also have a corresponding technical effect, and details are not described herein again.

A third aspect of embodiments of this application provides a base station system. The base station system includes the antenna apparatus described in the foregoing content. Because the antenna apparatus has the foregoing technical effect, the base station system including the antenna apparatus should also have a corresponding technical effect, and details are not described herein again.

It should be understood that the foregoing general descriptions and the following detailed descriptions are merely used as an example, and cannot limit this application.

### BRIEF DESCRIPTION OF DRAWINGS

To describe technical solutions in embodiments of this application more clearly, the following briefly describes the accompanying drawings for embodiments. It is clear that the accompanying drawings in the following descriptions show merely some embodiments of this application, and a person of ordinary skill in the art may derive other drawings from these accompanying drawings without creative efforts.
FIG. 1 is a diagram of a structure of a base station system in some embodiments according to this application;
FIG. 2 is a diagram of a structure of an antenna apparatus in FIG. 1 in some embodiments;
FIG. 3 is an example of a connection between a feed network and an antenna element in an antenna apparatus in an embodiment;
FIG. 4 is a diagram of a structure of a feed network according to a first embodiment of this application;
FIG. 5 is a side view of FIG. 4;
FIG. 6 is a top view of FIG. 4;
FIG. 7 is a diagram of a structure of a ground plane according to this application;
FIG. 8 is a diagram of a structure of a feed network according to a second embodiment of this application;
FIG. 9 is a diagram of a structure of a feed network according to a third embodiment of this application;
FIG. 10 is a side view of FIG. 9;
FIG. 11 is a front view of FIG. 9;
FIG. 12 is a diagram of a structure of a feed network according to a fourth embodiment of this application;
FIG. 13 is a side view of FIG. 12;
FIG. 14 is a diagram of a structure of a feed network according to a fifth embodiment of this application;
FIG. 15 is a diagram of a structure of a feed network according to a sixth embodiment of this application;
FIG. 16 is a diagram of a structure of a feed network according to a seventh embodiment of this application;
FIG. 17 is a diagram of a structure of a feed network according to an eighth embodiment of this application; and
FIG. 18 is a side view of FIG. 17.

Reference numerals:
100: Antenna apparatus;
   101: Antenna array;
   102: Feed network;
   103: Phase shifter;
   104: Transmission network;
   105: Combiner;
   106: Antenna connector;
   107: Radome;
   108: Antenna element;
200: Antenna adjustment bracket;
300: Mounting pole;
400: Connector seal;
500: Grounding apparatus;
1: Main line;
   11: Input port;
   12: Main-line output port;
2: Coupling line;
   21: Open end;
   22: Coupling-line output port;
3: Ground plane;
   31: Slot;
4: Support dielectric;
   41: First surface;
   42: Second surface;
X: Third direction;
Y: Second direction;
Z: First direction.

The accompanying drawings herein are incorporated into this specification and constitute a part of this specification, to show embodiments that conform to this application, and are used, together with this specification, to explain a principle of this application.

### DESCRIPTION OF EMBODIMENTS

To better understand technical solutions of this application, the following describes embodiments of this application in detail with reference to the accompanying drawings.

In descriptions of this application, unless otherwise explicitly specified and limited, the terms "first" and "second" are merely intended for description, and shall not be understood as an indication or implication of relative importance. Unless otherwise specified or stated, the term "a plurality of" means two or more. The terms "connect", "fasten", and the like should all be understood in a broad sense. For example, "connect" may be a fastening connection, a detachable connection, an integral connection, or an electrical connection, or may be a direct connection or an indirect connection through an intermediate medium. A person of ordinary skill in the art may understand specific meanings of the foregoing terms in this application based on specific situations.

The terms used in embodiments of this application are merely for the purpose of illustrating specific embodiments, and are not intended to limit this application. The terms "a", "the" and "said" of singular forms used in embodiments and the appended claims of this application are also intended to include plural forms, unless otherwise specified in the context clearly.

It should be understood that the term "and/or" used in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

The following explains possible terms in embodiments of this application.

Coupling: Coupling may be understood as direct coupling and/or indirect coupling. A "coupling connection" may be understood as a direct coupling connection and/or an indirect coupling connection. The direct coupling may also be referred to as an "electrical connection", which may be understood as physical contact and electrical conductivity between components; or may be understood as a form in which different components in a line structure are connected by using a physical line that can transmit an electrical signal, like printed circuit board (printed circuit board, PCB) copper foil or a conducting wire. The "indirect coupling" may be understood as electrical conductivity between two conductors in a separated/non-contact manner. In an embodiment, the indirect coupling may also be referred to as capacitive coupling. For example, signal transmission is implemented by forming an equivalent capacitor through coupling in a gap between two spaced conductive members.

Opposite/Disposed opposite to each other: That A and B are disposed opposite to each other may mean that A and B are disposed face to face (opposite to or face to face).

Ground/Ground plane: The ground/ground plane may generally represent at least a part of any grounding plane, or grounding plate, or grounding metal layer of an electronic device (for example, a mobile phone), or at least a part of any combination of any grounding plane, grounding plate, grounding part, or the like. The "ground/ground plane" may be configured to ground a component of the electronic device. In an embodiment, the "ground/ground plane" may be a grounding plane of a circuit board of the electronic device, or may be a grounding plate formed by a middle frame of the electronic device, or a grounding metal layer formed by a metal film below a screen of the electronic device. In an embodiment, the circuit board may be a printed circuit board (printed circuit board, PCB), for example, an 8-layer board, a 10-layer board, a 12-layer board, a 13-layer board, or a 14-layer board having 8, 10, 12, 13, or 14 layers of conductive materials, or an element that is separated and electrically insulated by a dielectric layer or an insulation layer like a glass fiber or a polymer. In an embodiment, the circuit board includes a dielectric substrate, a grounding plane, and a routing layer. The routing layer and the grounding plane are electrically connected through a via. In an embodiment, parts such as a display, a touchscreen, an input button, a transmitter, a processor, a memory, a battery, a charging circuit, and a system-on-chip (system-on-chip, SoC) structure may be mounted on or connected to the circuit board, or electrically connected to the routing layer and/or the grounding plane in the circuit board. For example, a radio frequency source is disposed on the routing layer.

Open end: In some embodiments, the open end is, for example, relative to the ground, and the open end is not grounded. Alternatively, the open end is, for example, relative to another conductor, and the open end is not electrically connected to the another conductor.

Limitations such as collinearity, coaxiality, coplanarity, symmetry (for example, axisymmetry or centrosymmetry), parallelism, perpendicularity, and sameness (for example, same length or same width) mentioned in embodiments of this application are all based on a current process level, but are not absolutely strict definitions in a mathematical sense. A deviation less than a predetermined threshold (for example, 1 mm, 0.5 m, or 0.1 mm) may exist between edges of two collinear radiation stubs or two collinear antenna elements in a line-width direction. A deviation less than a predetermined threshold (for example, 1 mm, 0.5 m, or 0.1 mm) may exist between edges of two coplanar radiation stubs or two coplanar antenna elements in a direction perpendicular to a coplanar plane of the two radiation stubs or two antenna elements. A deviation of a predetermined angle (for example, ±5° or ±10°) may exist between two antenna elements that are parallel or perpendicular to each other.

This application provides a base station system, an antenna apparatus 100, and a feed network 102. The base station system, the antenna apparatus 100, and an antenna array 101 may be used in fields such as radar, broadcast, and communication.

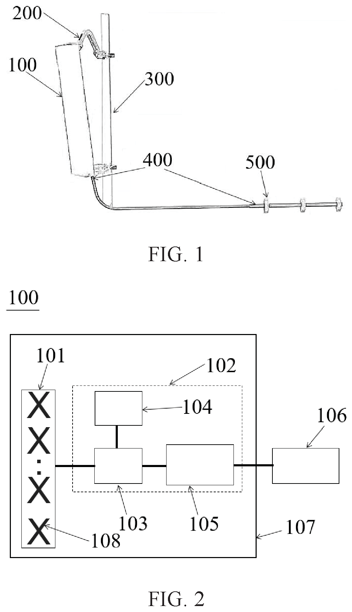

FIG. 1 is a diagram of a structure of a base station system in some embodiments according to this application. As shown in FIG. 1, the base station system includes an antenna apparatus 100, an antenna adjustment bracket 200, a mounting pole 300, a connector seal 400, a grounding apparatus 500, and the like. The base station system is an interface device for wireless communication and can exchange information with a communication terminal in a region in which the base station system is located.

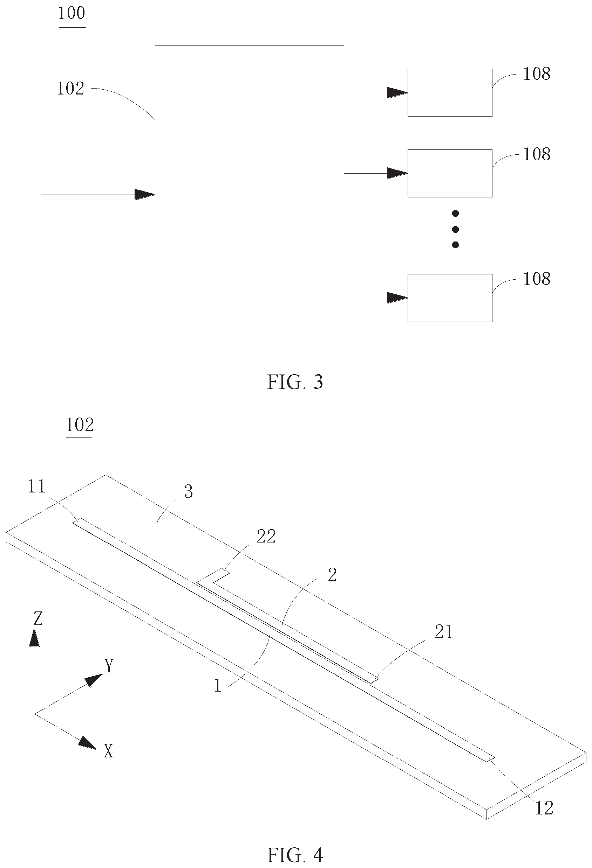

FIG. 2 is a diagram of a structure of the antenna apparatus 100 in FIG. 1 in some embodiments, and FIG. 3 is an example diagram of a connection between a feed network 102 and an antenna element 108 in the antenna apparatus 100 in an embodiment. As shown in FIG. 2, the antenna apparatus 100 includes an antenna array 101, a phase shifter 103, a transmission network 104 or a calibration network, a combiner 105 or a balun, and a radome 107. The antenna array 101 includes a plurality of antenna elements 108, and receives or transmits a radio frequency signal over the feed network 102 including the phase shifter 103, the transmission network 104, and the combiner 105. As shown in FIG. 3, the feed network 102 can feed a radio frequency signal to the antenna element 105 in the antenna array 101 based on a specific amplitude and phase. Alternatively, the feed network 102 can send a radio signal received by the antenna array 101 to a signal processing unit of the base station system through an antenna connector 106 based on a specific amplitude and phase. The radome 107 is a mechanical part that can protect an internal component from impact of an external environment, has a good electromagnetic wave penetration characteristic in terms of electrical performance, and can withstand an external harsh environment in terms of mechanical performance.

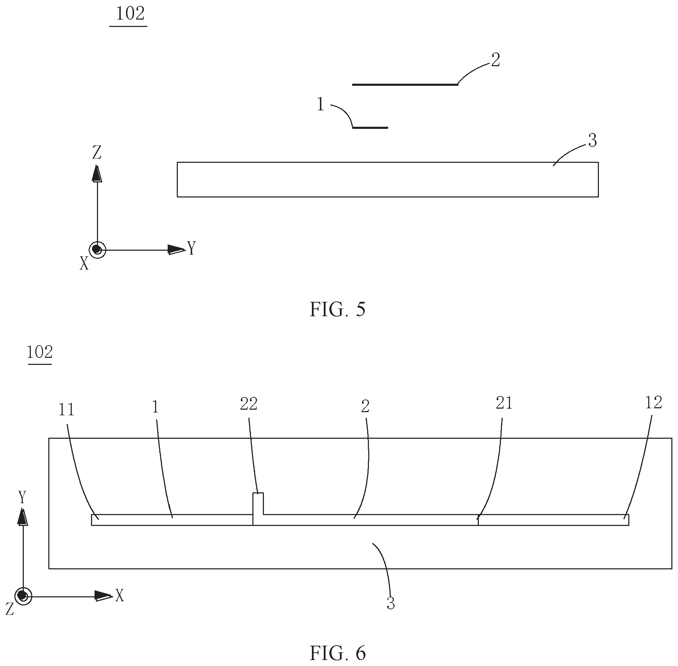

FIG. 4 is a diagram of a structure of a feed network according to a first embodiment of this application. FIG. 5 is a side view of FIG. 4, and FIG. 6 is a top view of FIG. 4.

As shown in FIG. 4, the feed network includes a ground plane 3, a main line 1, and a coupling line 2. The main line 1 is in coupling connection to the ground plane 3, and the coupling line 2 is in coupling connection to the main line 1 for signal transmission, so that the main line 1 and the coupling line 2 share a common reference ground, thereby avoiding resonance during signal transmission, improving an antenna gain of an antenna, and reducing an insertion loss and a radiation loss.

The ground plane 3 may be made of a conductive material. In an embodiment, the conductive material may be any one of the following materials: copper, aluminum, stainless steel, brass, an alloy thereof, copper foil on an insulating substrate, aluminum foil on an insulating substrate, gold foil on an insulating substrate, silver-plated copper, silver-plated copper foil on an insulating substrate, silver foil on an insulating substrate, tin-plated copper, cloth impregnated with graphite powder, a graphite-coated substrate, a copper-plated substrate, a brass-plated substrate, and an aluminum-plated substrate. Certainly, the ground plane 3 may be alternatively made of another conductive material. This is not limited herein.

For ease of understanding, a thickness direction of the main line 1 is defined as a first direction Z, a width direction of the main line 1 is defined as a second direction Y, and a length direction of the main line 1 is defined as a third direction X below. The first direction Z, the second direction Y, and the third direction X of the main line are approximately perpendicular to each other.

As shown in FIG. 4, along the first direction Z of the main line 1, the main line 1 includes an upper side and a lower side opposite to each other; along the second direction Y of the main line 1, the main line 1 includes a left side and a right side opposite to each other; and along the third direction X of the main line 1, the main line 1 includes a front side and a rear side opposite to each other. Based on an actual requirement, the ground plane 3 may be flexibly disposed on the upper side, the lower side, the left side, the right side, the front side, or the rear side of the main line 1, to improve design freedom of the feed network 102, and further facilitate a layout of the feed network 102 in the antenna apparatus 100.

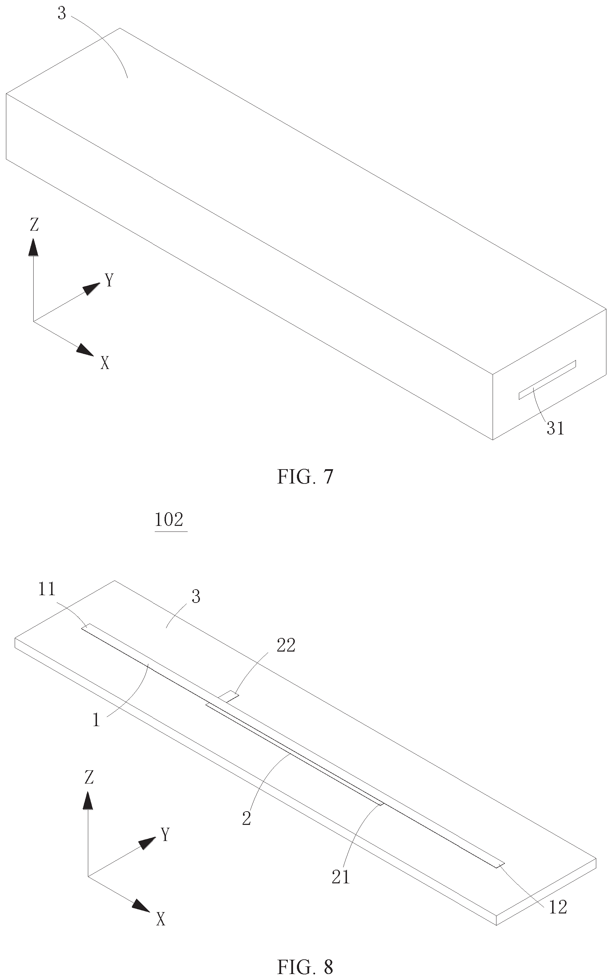

For example, the ground plane 3 is located on at least one side of the main line 1 along the first direction Z of the main line 1. For example, as shown in FIG. 4, the ground plane 3 may be located on the lower side of the main line 1, and/or the ground plane 3 may be located on the upper side of the main line 1. For example, the ground plane 3 is also located on at least one side of the main line 1 along the second direction Y of the main line 1. For example, the ground plane 3 may be located on the left side and/or the right side of the main line 1. For example, the ground plane 3 may be located on at least one side of the main line 1 along the first direction Z and at least one side of the main line 1 along the second direction Y at the same time. For example, the ground plane 3 is located on the upper side and/or the lower side of the main line 1 and the left side and/or the right side of the main line 1 at the same time. For example, the ground plane 3 is located on at least one side of the main line 1 along the third direction X of the main line 1. For example, the ground plane 3 may be located on the front side and/or the rear side of the main line 1. For example, the ground plane 3 may be located on at least one side of the main line 1 along the first direction Z and at least one side of the main line 1 along the third direction X at the same time. For example, the ground plane 3 is located on the upper side and/or the lower side of the main line 1 and the front side and/or the rear side of the main line 1 at the same time. For example, the ground plane 3 may be located on at least one side of the main line 1 along the second direction Y and at least one side of the main line 1 along the third direction X at the same time. For example, the ground plane 3 is located on the left side and/or the right side of the main line 1 and the front side and/or the rear side of the main line 1 at the same time. For example, the ground plane 3 may be located on at least one side of the main line 1 along the first direction Z, at least one side of the main line 1 along the second direction Y, and at least one side of the main line 1 along the third direction X at the same time. For example, FIG. 7 is a diagram of a structure of a ground plane according to this application. As shown in FIG. 7, the ground plane 3 may be a structure with a cavity, and the main line 1 and the coupling line 2 are located in the cavity of the ground plane 3. The ground plane 3 is located on the upper side, the lower side, the left side, the right side, the front side, and the rear side of the main line 1 at the same time, so that a radiation loss of a signal can be reduced. In addition, an aperture or a slot 31 may be provided on a side wall of the ground plane 3 along the third direction X of the main line 1, to facilitate signal transmission.

A structure and a position of the ground plane 3 may be set based on an actual requirement, provided that it can be ensured that the main line 1 and the coupling line 2 share a common reference ground. This is not limited herein.

As shown in FIG. 4, the main line 1 includes an input port 11 and at least one main-line output port 12, and the coupling line 2 includes an open end 21 and at least one coupling-line output port 22. In a signal transmission process, a signal can be input to the main line 1 through the input port 11 of the main line 1, and transmitted, through the main line 1, to the main-line output port 12 for output. In addition, at least a part of the signal transmitted on the main line 1 can be coupled to the coupling line 2 through the open end 21 of the coupling line 2, and transmitted, through the coupling line, to the coupling-line output port 22 for output.

Refer to both FIG. 5 and FIG. 6. The coupling line 2 and the main line 1 are spaced apart along the first direction Z of the main line 1, and a projection of the main line 1 at least partially overlaps a projection of the coupling line 2.

In this embodiment, as shown in FIG. 4 to FIG. 6, the feed network 102 has a simple structure and good manufacturability. The main line 1 and the coupling line 2 are located in different planes perpendicular to the first direction Z, so that space occupied by the main line 1 and the coupling line 2 in a plane perpendicular to the first direction Z can be reduced, thereby reducing layout space occupied by the feed network 102, and facilitating a layout of the feed network 102 in the antenna apparatus 100. In addition, the coupling line 2 and the main line 1 are spaced apart along the first direction Z of the main line 1. This facilitates adjustment of a spacing distance between the main line 1 and the coupling line 2, thereby reducing routing density, reducing mutual coupling between another feed network 102 or antenna element 108 and the main line 1 or the coupling line 2, and improving an antenna gain.

In addition, if a phase slope difference of a signal between main-line output ports 12 and coupling-line output ports 22 is large, antenna performance is affected. In embodiments of this application, because there is no direct current connection between the main line 1 and the coupling line 2, phase slopes of a signal at the main-line output port 12 and the coupling-line output port 22 may be adjusted through inter-line coupling based on lengths, widths, and shapes of the main line 1 and the coupling line 2, the spacing distance between the main line 1 and the coupling line 2, or the like, to improve an antenna gain, thereby further reducing structural complexity of the feed network 102 and improving design freedom of the feed network 102. In addition, the phase slopes of the signal at the main-line output port 12 and the coupling-line output port 22 are adjusted through inter-line coupling between the main line 1 and the coupling line 2, so that it is easier to reduce a phase slope difference of the signal between the main-line output ports 12 and the coupling-line output ports 22, and reduce a quantity of phase jump cycles of the signal between the main-line output ports 12 and the coupling-line output ports 22, thereby effectively improving an antenna gain.

Further, as shown in FIG. 5 and FIG. 6, a projection of the main line 1 at least partially overlaps a projection of the coupling line 2 along the first direction Z of the main line 1, thereby further reducing, for example, space occupied by the feed network 102. Certainly, in another embodiment, projections of the main line 1 and the coupling line 2 in the first direction Z may be alternatively staggered, to further improve the design freedom of the feed network 102, and further facilitate a flexible layout of the feed network 102 in the antenna apparatus 100.

Further, as shown in FIG. 4, only one input port 11 of the main line 1 is provided, so that a function of converting, by the feed network 102, one input signal into a plurality of signals for output can be implemented, thereby improving signal transmission efficiency. In addition, the feed network 102 has a simpler structure, thereby facilitating the layout of the feed network 102 in the antenna apparatus 100.

A quantity of main-line output ports 12 of the main line 1 may be one, two, three, or the like, and a quantity of coupling-line output ports 22 of the coupling line 2 may be one, two, three, or the like, so that the feed network 102 can have more output ports, thereby implementing a simple 1-to-N (N≥2) feed network 102. This may be specifically set based on an actual requirement, and is not limited herein.

In a specific embodiment, the feed network 102 may include one main line 1 and one coupling line 2, and the coupling line 1 is located on one side of the main line 1 along the first direction Z of the main line 1.

In the specific embodiment shown in FIG. 4, the feed network 102 includes one main line 1 and one coupling line 2. The main line 1 is provided with one input port 11 and one main-line output port 12. The coupling line 2 is provided with one open end 21 and one coupling line output port 22. The coupling line 2 is in coupling connection to the main line 1 through the open end 21, to form a simple 1-to-2 feed network 102. Certainly, two, three, or more main-line output ports 12 and/or coupling-line output ports 22 may be disposed on the main line 1 and/or the coupling line 2 based on an actual requirement, to implement a simpler 1-to-N (N≥2) feed network 102. This is not limited herein.

For example, as shown in FIG. 4, along the first direction Z of the main line 1, the coupling line 2 may be located on the upper side of the main line 1, that is, the coupling line 2 is located on a side that is of the main line 1 and that is away from the ground plane 3. Alternatively, for example, FIG. 8 is a diagram of a structure of a feed network according to a second embodiment of this application. As shown in FIG. 8, the coupling line 2 may be alternatively located on the lower side of the main line 1, that is, the coupling line 2 is disposed between the main line 1 and the ground plane 3. The coupling line 2 may be specifically disposed based on an actual requirement, to further improve the design freedom of the feed network 102.

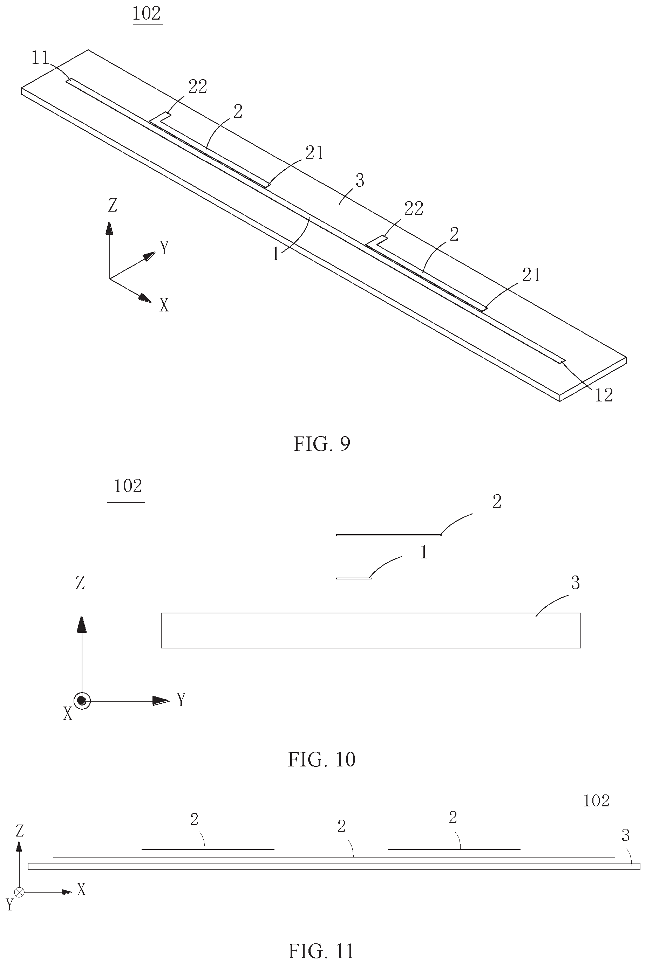

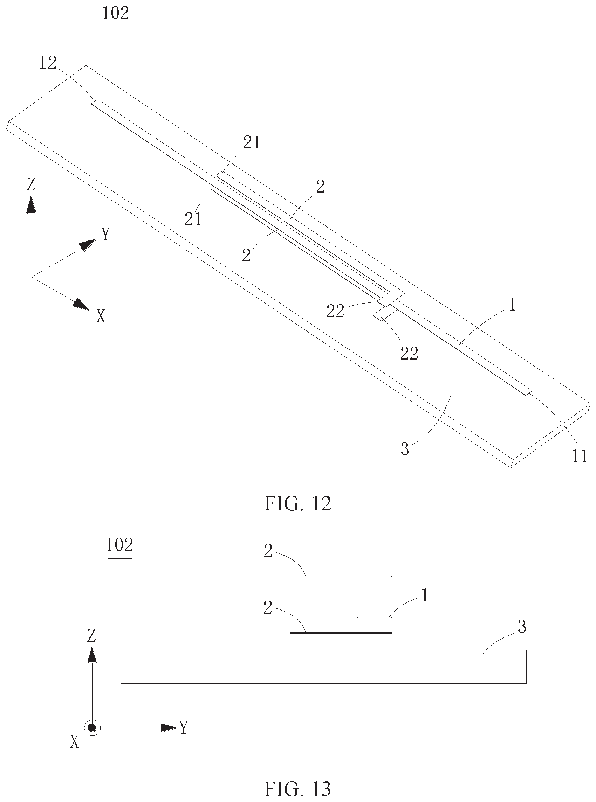

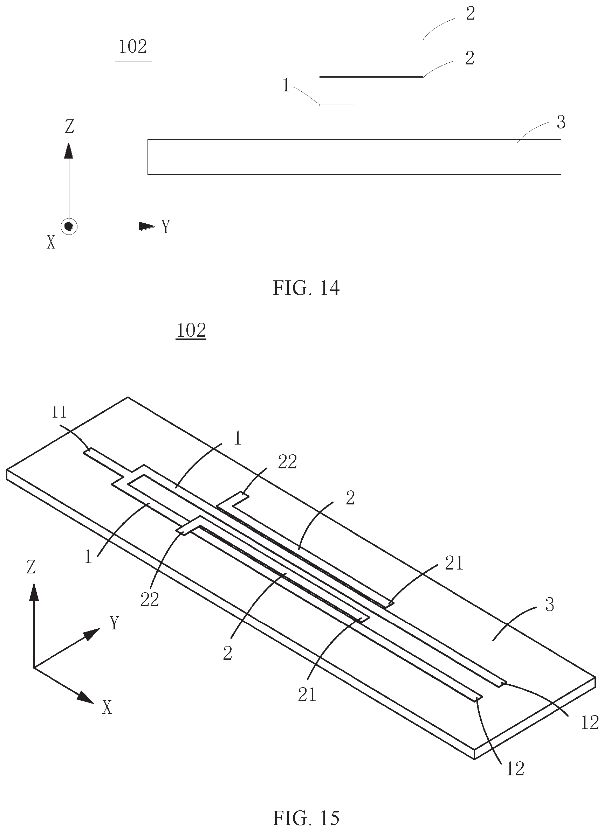

FIG. 9 is a diagram of a structure of a feed network according to a third embodiment of this application. FIG. 10 is a side view of FIG. 9, and FIG. 11 is a front view of FIG. 9. FIG. 12 is a diagram of a structure of a feed network according to a fourth embodiment of this application, and FIG. 13 is a side view of FIG. 12. FIG. 14 is a diagram of a structure of a feed network according to a fifth embodiment of this application.

In a specific embodiment, the feed network 102 may include one main line 1 and a plurality of coupling lines 2. A quantity of coupling lines 2 may be two, three, four, or the like, and may be specifically set based on an actual requirement. This is not limited herein. In the specific embodiments shown in FIG. 9 and FIG. 12, the feed network 102 includes one main line 1 and two coupling lines 2. The main line 1 includes one input port 11 and one main-line output port 12. Each coupling line 2 includes one open end 21 and one coupling-line output port 22, and each coupling line 2 is in coupling connection to the main line 1 through the open end 21 of the coupling line 2, to form a simple 1-to-3 feed network 102.

For example, a plurality of coupling lines 2 may be located on one side of the main line 1 along the first direction Z of the main line 1. For example, in the specific embodiment shown in FIG. 9, the two coupling lines 2 may be located on a same side of the main line 1. Alternatively, for example, a plurality of coupling lines 2 may be respectively located on two sides of the main line 1 along the first direction Z of the main line 1. For example, in the specific embodiment shown in FIG. 12, the two coupling lines 2 may be respectively located on two opposite sides of the main line 1, to further improve the design freedom of the feed network 102, meet a layout requirement of the feed network 102 in different antenna apparatuses 100, and meet a requirement for adjusting phase slopes of main-line output ports 12 and coupling-line output ports 22, thereby improving an antenna gain.

Further, when the plurality of coupling lines 2 are located on a same side of the main line 1 along the first direction Z, for example, at least two of the plurality of coupling lines 2 are located in a same plane perpendicular to the first direction Z of the main line. For example, in the specific embodiments shown in FIG. 9 to FIG. 11, the two coupling lines 2 are located in a same plane perpendicular to the first direction Z. Alternatively, for example, in the specific embodiment shown in FIG. 14, at least two of the plurality of coupling lines 2 are spaced apart along the first direction Z of the main line 1, that is, at least two coupling lines 2 are located in two different planes perpendicular to the first direction Z.

As shown in FIG. 12 and FIG. 13, when the plurality of coupling lines 2 are respectively located on two opposite sides of the main line 2 along the first direction Z, for example, at least two coupling lines 2 exist on at least one side of the main line 1 and are located in a same plane perpendicular to the first direction Z of the main line, or for example, at least two coupling lines 2 exist on at least one side of the main line 1, and at least two of the plurality of coupling lines 2 are spaced apart along the first direction Z of the main line 1, that is, at least two coupling lines 2 are located in two different planes perpendicular to the first direction Z.

Phase slopes of main-line output ports 12 and coupling-line output ports 22 can be adjusted by adjusting positions of the plurality of coupling lines 2 relative to the main line 1, thereby reducing a phase slope difference between the main-line output ports 12 and the coupling-line output ports 22, reducing a quantity of phase jump cycles, improving an antenna gain, further improving the design freedom of the feed network 102, and meeting a layout requirement of the feed network 102 in different antenna apparatuses 100.

As shown in FIG. 11, when at least two coupling lines 2 are located in a same plane perpendicular to the first direction Z of the main line, the plurality of coupling lines 2 located in the same plane are spaced apart along the second direction Y and/or the third direction X of the main line, to reduce inter-line mutual coupling and improve an antenna gain.

Further, FIG. 15 is a diagram of a structure of a feed network according to a sixth embodiment of this application.

In a specific embodiment, the feed network 102 may alternatively include a plurality of main lines 1, and the plurality of main lines 1 are connected in parallel to share one input port 11, to form a simple 1-to-N (N≥2) feed network 102. A quantity of main lines 1 may be two, three, four, or the like. In addition, when there are the plurality of main lines 1, a quantity of coupling lines 2 may be greater than or equal to the quantity of main lines 1, and may be specifically set based on an actual requirement. This is not limited herein.

For example, in the specific embodiment shown in FIG. 15, the feed network 2 includes two main lines 1, and the two main lines 1 are connected in parallel to share one input port 11. The feed network 102 further includes two coupling lines 2. The two coupling lines 2 are located in a same plane perpendicular to the first direction Z, and are spaced apart along the second direction Y. A projection of each coupling line 2 at least partially overlaps a projection of a main line 1 corresponding to the coupling line 2 in the first direction Z. The structure is simple, can implement a simple 1-to-4 feed network 102, and occupies small layout space, so that a layout in the antenna apparatus 100 is facilitated.

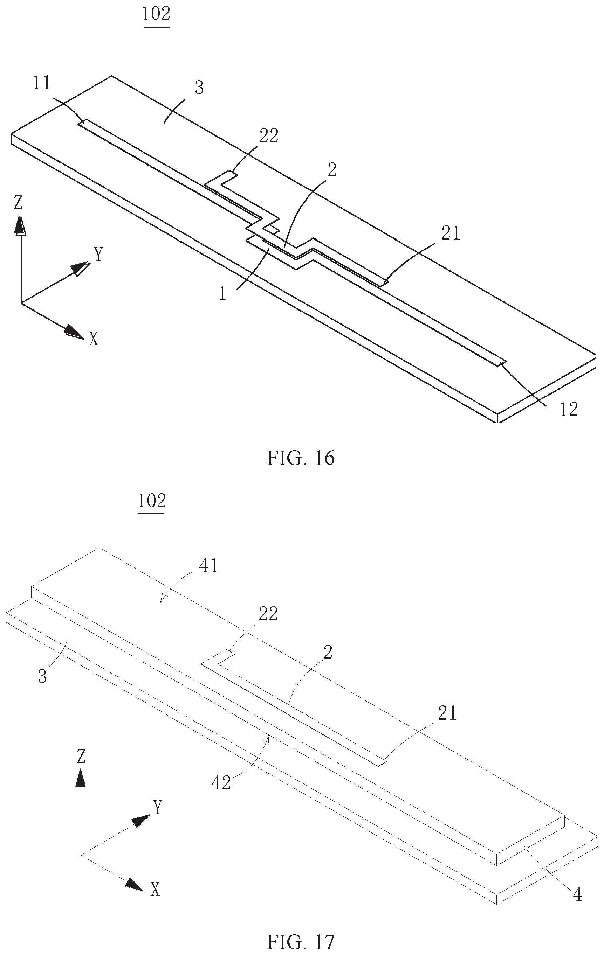

FIG. 16 is a diagram of a structure of a feed network according to a seventh embodiment of this application.

In the foregoing embodiments, the main line 1 may be one or a combination of two or more of a straight line, a curve, or a broken line, and correspondingly, the coupling line 2 may be one or a combination of two or more of a straight line, a curve, or a broken line. Certainly, the main line 1 and the coupling line 2 may alternatively be in other irregular shapes, which may be specifically set based on a requirement. This is not limited herein.

In this embodiment, phase slopes of main-line output ports 12 and coupling-line output ports 22 can be adjusted by adjusting shapes of the main line 1 and the coupling line 2, thereby reducing a phase slope difference between the main-line output ports 12 and the coupling-line output ports 22, reducing a quantity of phase jump cycles, improving an antenna gain, further improving the design freedom of the feed network 102, and meeting a layout requirement of the feed network 102 in different antenna apparatuses 100.

In the specific embodiments shown in FIG. 5 to FIG. 15, both the main line 1 and the coupling line 2 are straight lines, and the structure can reduce routing density and reduce inter-line coupling. In the specific embodiment shown in FIG. 16, both the main line 1 and the coupling line 2 are broken lines, and the structure can avoid another element such as the coupling line 2 or the main line 1 in the feed network 102, thereby further reducing routing density.

In the foregoing embodiments, a spacing distance between the antenna 1 and the coupling line 2 along the first direction Z of the antenna 1, a spacing distance between the plurality of coupling lines 2, a spacing distance between the plurality of coupling lines 2 along the second direction Y and/or the third direction Z of the antenna 1, thicknesses of each main line 1 and each coupling line 2 along the first direction Z, widths of each main line 1 and each coupling line 2 along the second direction Y, lengths of each main line 1 and each coupling line 2 along the third direction Z, shapes of each main line 1 and each coupling line 2, and the like may be set based on an actual requirement, to meet a layout requirement of the feed network 102 in different antenna apparatuses 100, and meet a requirement for adjusting phase slopes of the main-line output ports 12 and the coupling-line output ports 22, thereby improving antenna performance. This is not limited herein.

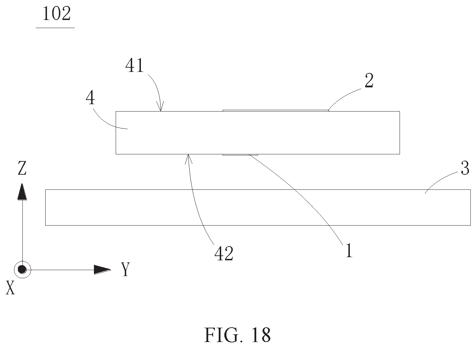

FIG. 17 is a diagram of a structure of a feed network according to an eighth embodiment of this application, and FIG. 18 is a side view of FIG. 17.

As shown in FIG. 17 and FIG. 18, in a specific embodiment, the feed network 102 may further include a support dielectric 4, and along the first direction Z of the main line 1, the support dielectric 4 includes a first surface 41 and a second surface 42 opposite to each other, where one of the first surface 41 and the second surface 42 is provided with the main line, and the other is provided with the coupling line 2.

In this embodiment, the support dielectric 4 can fasten the main line 1 and the coupling line 2, and maintain stability of relative positions of the main line 1 and the coupling line 2, thereby facilitating miniaturization design of the feed network 102 and further reducing space occupied by the feed network 102. In addition, the support dielectric 4 can be disposed to better restrict an electromagnetic wave, facilitate stable propagation of a signal, and facilitate improvement of an antenna gain.

The support dielectric 4 may be a circuit board or a plastic part. Specifically, a material of the support dielectric 4 may be ceramic, polycarbonate (PC), or improved polyester resin (PY). Certainly, a dielectric layer may be alternatively made of another material that can be used for energy radiation. This is not limited herein.

For same or similar parts of embodiments of this specification, refer to each other. Especially, apparatus and terminal embodiments are basically similar to a method embodiment, and therefore are described briefly. For related parts, refer to descriptions in the method embodiment.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A feed network, comprising:
a ground plane;
a main line, wherein the main line is in coupling connection to the ground plane and comprises an input port and at least one main-line output port; and
a coupling line, wherein along a first direction of the main line, the coupling line is in coupling connection to the main line, and the coupling line and the main line are spaced apart; and the coupling line comprises an open end and at least one coupling-line output port.

2. The feed network according to claim 1, wherein the feed network comprises a plurality of coupling lines, and the plurality of coupling lines are located on a same side of the main line along the first direction of the main line.

3. The feed network according to claim 1, wherein the feed network comprises a plurality of coupling lines, and the plurality of coupling lines are respectively located on two sides of the main line along the first direction of the main line.

4. The feed network according to claim 2 or 3, wherein at least two of the plurality of coupling lines are spaced apart along the first direction of the main line.

5. The feed network according to claim 2 or 3, wherein at least two of the plurality of coupling lines are located in a same plane perpendicular to the first direction of the main line;
a plurality of coupling lines located in a same plane are spaced apart along a second direction and/or a third direction of the main line; and
the first direction, the second direction, and the third direction of the main line are perpendicular to each other.

6. The feed network according to any one of claims 1 to 5, wherein a projection of the main line at least partially overlaps a projection of the coupling line along the first direction of the main line.

7. The feed network according to any one of claims 1 to 6, wherein one input port is provided.

8. The feed network according to claim 7, wherein the feed network comprises a plurality of main lines, and the plurality of main lines are connected in parallel to share the one input port.

9. The feed network according to any one of claims 1 to 8, wherein the main line is one or a combination of two or more of a straight line, a curve, or a broken line.

10. The feed network according to any one of claims 1 to 9, wherein the coupling line is one or a combination of two or more of a straight line, a curve, or a broken line.

11. The feed network according to any one of claims 1 to 10, wherein the ground plane is located on at least one side of the main line along the first direction of the main line.

12. The feed network according to any one of claims 1 to 11, wherein the ground plane is located on at least one side of the main line along the second direction of the main line.

13. The feed network according to any one of claims 1 to 12, wherein the feed network further comprises a support dielectric, and along the first direction of the main line, the support dielectric comprises a first surface and a second surface opposite to each other; and
one of the first surface and the second surface is provided with the main line, and the other is provided with the coupling line.

14. An antenna apparatus, wherein the antenna apparatus comprises the feed network according to any one of claims 1 to 13.

15. A base station system, wherein the base station system comprises the antenna apparatus according to claim 14.
